# EUROPÄISCHE PATENTANMELDUNG

(11) **EP 2 581 788 A1**
(43) Veröffentlichungstag der Anmeldung: **17.04.2013**
(21) Anmeldenummer: 11184667.1
(22) Anmeldetag: 11.10.2011
(51) Int. Cl.: G03B 3/10, G02B 7/38, H04N 5/232

(54) **Vorrichtung und Verfahren für ein pumpfreies Autofokus-System**

(71) Anmelder: Denz, Peter, 81673 München (DE)
(72) Erfinder: Denz, Peter, 81673 München (DE)
(74) Vertreter: Wegner, Hans

(57) **Zusammenfassung**

Vorrichtung (100) zur automatischen Fokussierung einer Kamera mittels Kontrastsensitivität, aufweisend einen ersten CCD-Sensor (115, 120, 125) zur Bestimmung eines Schärfemaximums der Kamera, einen Speicher zum Speichern des Schärfemaximums und einen zweiten CCD-Sensor (115, 120, 125) zum Einstellen des Schärfemaximums.

## Beschreibung

### 1. Technisches Gebiet

Die vorliegende Erfindung betrifft ein Autofokus-System sowie zugehörige Verfahren.

### 2. Der Stand der Technik

Bei modernen Kamerasystemen kommen heutzutage in der Regel Autofokus-Systeme zum Einsatz, da manuelle Fokus-Systeme umständlich und zeitaufwendig sind. Es sind verschiedene Systeme zur Autofokussierung, also zur automatischen Scharfstellung eines Objekts, bekannt. Daher unterscheidet man zwischen passiven und aktiven Autofokus-Systemen.

Bei den aktiven Autofokus-Systemen sendet eine Kamera ein Signal (z.B. Infrarot oder Ultraschall) aus und misst darüber die Entfernung zum Objekt. Basierend auf der gemessenen Entfernung kann das Objekt in der Kamera scharfgestellt werden. Diese Autofokus-Systeme sind zwar relativ schnell, aber auch relativ ungenau, insbesondere wenn das Objekt weit entfernt ist.

Darüber hinaus gibt es passive Autofokus-Systeme, die nicht die Entfernung zum Objekt messen, sondern Objekte anhand eines ermittelten Kontrastwertes fokussieren, da der Kontrast ein Maß für die Schärfe eines Bildes ist. Beim sogenannten Kontrast-Autofokus wird zunächst die Frequenzverteilung eines Motivs über einen Sensorchip, z.B. einen CCD-Sensor, ermittelt. Das Bild ist bei einem maximalen Kontrastwert scharfgestellt. Die Ermittlung dieses Maximums erfordert jedoch ein Hin- und Herfahren des Objektivs, um verschiedene Kontrastwerte und damit das Maximum zu bestimmen.

In der Regel wird hierzu ein sogenannter "hill-climbing Algorithmus" verwendet, wobei der Maximalwert bestimmt wird, indem über den Maximalwert hinweggefahren wird, sodass der Kontrast zunächst ansteigt und nach Erreichen des Maximums wieder abfällt. Anschließend wird das Linsensystem bis zum ermittelten maximalen Kontrast zurückgefahren und das Objekt ist scharfgestellt. Die Folge dieses Verfahrens ist also ein Hin- und Herfahren des Objektivs.

So beschreibt z.B. das deutsche Patent DE 689 14 712 T2 eine automatische Fokussiereinrichtung. Bei Veränderung der Fokussierlinsenposition ändert sich der Fokuswert, wobei dieser einen Maximalwert durchschreitet. Anschließend sinkt der Fokuswert, was vom Algorithmus erkannt wird. Daraufhin wird die Linse mit reduzierter Geschwindigkeit zurückgefahren, bis der vorher ermittelte Maximalwert erreicht ist.

Dieses Autofokus Verfahren führt notwendig zu einem "Pumpen" des Objektives, d.h., zu einem ein Hin- und Herfahren des Objektivs, da der Maximalwert erst erkannt wird, wenn der Kontrast wieder abfällt. Insbesondere kann bei der Fein-Justierung mehrfaches Hin- und Herfahren erforderlich sein. Das Verfahren ist zeitaufwendig und erhöht darüber hinaus den Energiebedarf der Kamera für den Betrieb des Motors zur Objektivbewegung.

Der vorliegenden Erfindung liegt daher das Problem zugrunde, eine effizientere und schnellere Vorrichtung, sowie entsprechende Verfahren bereitzustellen, mit denen über ein Kontrast-Autofokus Verfahren ein Objekt scharfgestellt werden kann, ohne dass es zum "Pumpen" kommt und die damit verbundenen Nachteile auftreten.

### 3. Zusammenfassung der Erfindung

Dieses Problem wird gemäß einem ersten Aspekt der Erfindung durch eine Vorrichtung zur automatischen Fokussierung einer Kamera mittels Kontrastsensitivität gelöst, welche einen ersten CCD-Sensor zur Bestimmung eines Schärfemaximums der Kamera, einen Speicher zum Speichern des Schärfemaximums und einen zweiten CCD-Sensor zum Einstellen des Schärfemaximums aufweist.

Die vorliegende Erfindung ermöglicht es also, durch die Verwendung eines weiteren CCD-Sensors ein Hin- und Herfahren des Autofokussystems zu vermeiden. Das von einem ersten CCD-Sensor gemessene Schärfemaximum kann direkt an einem zweiten CCD-Sensor eingestellt werden, ohne dass die Vorschubbewegung des Autofokussystems, bzw. des Linsensystems umgekehrt werden muss. Somit ist von der Ausgangsposition nur eine Bewegung in eine Richtung notwendig, um das Objekt scharfzustellen. Auf diese Weise wird die Fokussierung erheblich beschleunigt, da die Drehrichtung des Autofokusmotors nicht geändert werden muss; es kommt insbesondere nicht zum unerwünschten Pumpen. Aus dem gleichen Grund lässt sich auch die Lebensdauer einer möglicherweise vorhandenen Batterie erhöhen, da weniger Motorbewegungen nötig sind. Daher liefert die vorliegende Erfindung einen erheblichen positiven Beitrag zur passiven Autofokus-Technologie.

Gemäß einem weiteren Aspekt weist die Vorrichtung weiterhin einen dritten CCD-Sensor auf, der zur Bestimmung des Schärfemaximums der Kamera geeignet ist.

Die Verwendung eines dritten CCD-Sensors erlaubt es, das Objekt unabhängig von der Position der Schärfeebene, also dem Kontrastmaximum, im Kamerasystem scharfzustellen. So kann die Schärfeebene vor oder hinter den CCD-Sensoren liegen. In diesem Fall wird durch Verwendung eines dritten CCD-Sensors sichergestellt, dass in jedem Fall ein Schärfemaximum von einem CCD-Sensor gemessen wird, welches danach auf dem zweiten CCD-Sensor eingestellt werden kann, ohne dass ein Pumpen auftritt.

In einer bevorzugten Ausführungsform wird zwischen zwei CCD-Sensoren ein Schärfegradient bestimmt.

Der Schärfegradient ist die Raumrichtung zunehmender Schärfe auf der Anordnungsachse der CCD-Sensoren. Der Schärfegradient kann zusätzlich zum Schärfemaximum ausgewertet werden, um zu ermitteln, in welche Richtung sich das Objektiv bewegen muss, um das Objekt scharfzustellen.

Vorzugsweise umfasst die erfindungsgemäße Vorrichtung die Möglichkeit zum Speichern zeitabhängiger Kontrastwerte der CCD-Sensoren.

Beim Durchfahren der Fokusposition in eine Richtung werden durch die CCD-Sensoren verschiedene Kontrastwerte gemessen. Gespeicherte Werte können herangezogen werden, um die Änderung der Kontrastwerte auf den verschiedenen CCD-Sensoren zu messen und daraus das Schärfemaximum zu ermitteln. Dies kann insbesondere im Fall von Zwischenpositionen helfen, um das Schärfemaximum zu finden, ohne dass an einem CCD-Sensor das Schärfemaximum durchlaufen wird.

In einem weiteren Aspekt wird aus zwei Kontrastwerten von zwei verschiedenen CCD-Sensoren eine Ersatztangente bestimmt.

Das Schärfemaximum ist ein bestimmter Kontrastwert, der bei einer bestimmten Linsenposition erreicht wird. Wenn die jeweilige Empfindlichkeit der verwendeten CCD-Sensoren bekannt ist, kann durch zwei Kontrastwerte, die von verschiedenen CCD-Sensoren gemessen werden, der Maximalwert, und damit das Schärfemaximum bestimmt werden. Dieses Schärfemaximum wird durch die Ersatztangente bestimmt, welche durch die beiden Kontrastwerte festgelegt ist.

Vorzugsweise werden das Schärfemaximum und die Kontrastwerte mit einer Fast-Fourier-Transformation bestimmt.

Fast-Fourier-Transformationen sind gängige Verfahren zur Frequenzanalyse und damit zur Bestimmung von Schärfemaxima, denn diese hängen direkt mit der Frequenz zusammen. Genauer gesagt, wird bei der Fast-Fourier-Transformation ein Signal (z.B. das eines CCD-Sensors) in seine Frequenzbestandteile zerlegt und diese anschließend ausgewertet.

Gemäß einem Aspekt der Erfindung wird das Problem der Erfindung durch ein Verfahren zur automatischen Fokussierung einer Kamera mittels Kontrastsensitivität gelöst unter Verwendung einer der oben genannten Vorrichtungen.

Gemäß einem weiteren Aspekt der Erfindung kann ein Computerprogramm Instruktionen zur Implementierung des erfindungsgemäßen Verfahrens umfassen.

### 4. Kurze Beschreibung der begleitenden Figuren

Im Folgenden werden Aspekte der vorliegenden Erfindung unter Bezugnahme auf die begleitenden Figuren erläutert. Diese Figuren zeigen:
- **Fig. 1:**: ein erfindungsgemäßes Autofokus-System in einer Ausführungsform mit drei CCD-Sensoren;
- **Fig. 2:**: eine Durchführung des erfindungsgemäßen Verfahrens unter Verwendung von drei CCD-Sensoren;
- **Fig. 3:**: eine Umsetzung des Verfahrens zur Autofokussierung, wenn die Schärfeebene zu Beginn zwischen zwei CCD-Sensoren liegt; und
- **Fig. 4:**: eine schematische Darstellung der Ermittlung einer Ersatztangente.

### 5. Detaillierte Beschreibung von bevorzugten Ausführungsformen

Im Folgenden werden gegenwärtig bevorzugte Ausführungsbeispiele der erfindungsgemäßen Vorrichtung und Verfahren für einen pumpfreien Kontrast-Autofokus genauer erläutert.

Das erfindungsgemäße Autofokus-System verwendet das Verfahren der Kontrastsensitivität unter Vermeidung des "Pumpens" bei der Adjustierung. Dieses Pumpen ist systematisch begründet, da die Änderung der Schärfe eine achsensymmetrische Funktion mit einem Maximalwert, dem Schärfemaximum, ist. Vor und hinter dem Schärfemaximum gibt es also einen hinreichend symmetrischen Abfall der Schärfe. Erfindungsgemäß kann dieses Schärfemaximum durch einen ersten CCD-Sensor gemessen und danach an einem zweiten CCD-Sensor eingestellt werden. Die Distanzen zwischen den Ebenen der Sensoren sind in der Regel so klein, dass die Schärfe im Rahmen der Messgenauigkeit auf beiden Seiten näherungsweise gleich abfällt. Mögliche Gründe für auftretende Asymmetrien könnten zum Beispiel eine Inhomogenität im Schliff der Linse, Streuungen in der Steigung des Linsengewindes oder Extreme in der nachgeschalteten Optik (Makrofunktion, Zoom, etc.) sein. Bei Anwendungen im Filmgeschäft ist szenisch gesehen der Einsatz der Extremfunktionen zusammen mit Autofokus in der Regel selten und könnte zum Beispiel durch eine entsprechende Modifikation der Auswertesoftware beherrscht werden. Eine Möglichkeit wäre eine z.B. (einmalig) einstellbare "Sekantenverschiebung" entsprechend der o.g. Asymmetrie, die Rücksicht auf die speziellen Eigenschaften der Kamera nimmt.

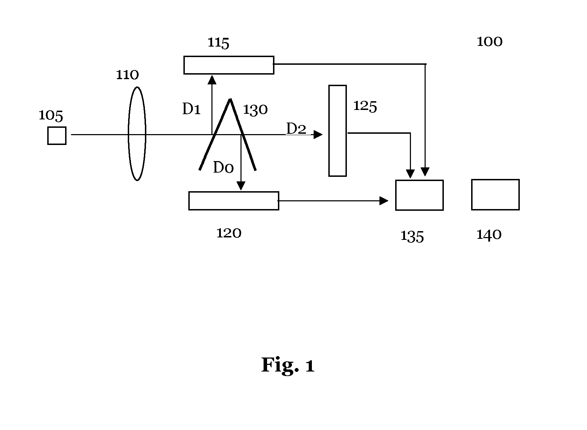

Dies ist in **Fig. 1** gezeigt, welche eine bevorzugte Ausführungsform des erfindungsgemäßen Autofokus-Systems **100** darstellt, das drei CCD-Sensoren **115, 120, 125** umfasst. Ein scharfzustellendes Objekt **105** wird durch ein Linsensystem **110** abgebildet. Durch die Verwendung (halb-)durchlässiger Spiegel **130** werden drei Strahlengänge erzeugt, Do, D1 und D2.

In der beschriebenen Ausführungsform soll das Objekt **105** auf dem CCD-Sensor CCD0 **120** scharf abgebildet werden. Je nach anfänglicher Position des Schärfemaximums wird hierzu der CCD-Sensor **CCD1115** oder der CCD-Sensor CCD2 **125** verwendet. In Abhängigkeit vom Signal der jeweiligen CCD-Sensoren **115, 120_{,} 125** wird der Fokusmotor **140** aktiviert, um das Objekt **105** auf dem CCD-Sensor CCDo **120** scharfzustellen.

Die verwendeten CCD-Sensoren **115, 120, 125** müssen aufeinander kalibriert sein, damit die jeweiligen Messwerte der CCD-Sensoren **115, 120, 125** miteinander verglichen werden können. Die Kalibrierung ist notwendig, weil in allen folgenden Messungen davon Gebrauch gemacht wird. Jedoch kann die Kalibrierung auch in der Auswertung der Amplitude nachträglich erfolgen. Denn es sind immer Streuungen in der Empfindlichkeit und Dämpfungen durch die Spiegel möglich. Die Genauigkeit sollte dabei auf das "least significant bit" (LSB) der A/D-Wandlung bezogen werden, da hiermit auch die Schärfe des Bildinhaltes und damit die Präzision der errechneten Frequenzkoeffizienten bestimmt werden. Ebenso wichtig ist eine günstige Festlegung der Schärfeebenen-Distanz im Strahlengang der Meßkamera: Sie soll im Hinblick auf die Einstellgeschwindigkeit optimal sein. Unter bestimmten Konstellationen wäre eine Kalibrierung jedoch nicht erforderlich, wenn drei CCD-Sensoren zu Messung verwendet werden.

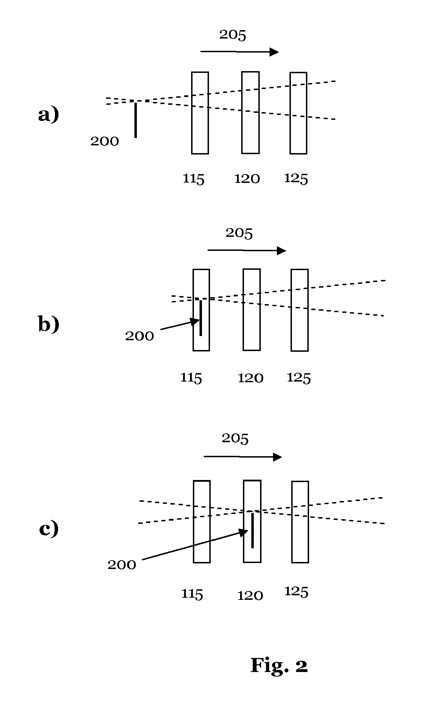

**Fig. 2** zeigt eine schematische mögliche Umsetzung des erfindungsgemäßen Autofokus-Verfahrens unter Verwendung der bevorzugten Vorrichtung nach **Fig. 1****,** wobei das Objekt **105** mit seiner Schärfeebene **200,** also der Position maximalen Kontrasts, zunächst außerhalb der CCD-Sensoren **115, 120, 125** liegt. Diese Ausgangssituation ist in **Fig. 2a** gezeigt.

Zunächst wird durch Auswertung der Signale von mindestens zwei CCD-Sensoren **115, 120, 125** der Schärfegradient ermittelt. Der Schärfegradient gibt die Raumrichtung zunehmender Schärfe auf der Anordnungsachse der CCD-Sensoren **115, 120, 125** an. Der Schärfegradient gibt somit eine eindeutige Richtung an, in der das Schärfemaximum zu finden ist. In dem in **Fig. 2a** dargestellten Beispiel ist der Kontrast auf CCD-Sensor CCD1 **115** zunächst am höchsten, während er in Richtung der CCD-Sensoren CCD0 **120** und CCD2 **125** abnimmt. Daher muss in diesem Fall die Schärfeebene **200** entlang der eingezeichneten positiven Richtung **205** verschoben werden, um den höchsten Kontrast auf dem CCD-Sensor CCD0 **120** zu erzielen.

Im nächsten Schritt, dargestellt in **Fig. 2b** wurde die Schärfeebene **200** soweit in die positive Richtung **205** verschoben, dass sie genau auf dem CCD-Sensor CCD1 **115** liegt. Dieser Wert wird von einem Prozessor im Vorbeilauf als Maximum festgelegt und in einem Speicher abgelegt. Damit das Objekt auf dem CCD-Sensor CCD0 **120** scharfgestellt werden kann, muss die Schärfeebene **200** weiter entlang der positiven Richtung verschoben werden.

Nachdem die Schärfeebene **200** weiter verschoben wurde, kommt sie auf dem CCD-Sensor CCD0 **120** zum liegen, wie in **Fig. 2c** gezeigt ist. Der Kontrast entspricht dem zuvor auf dem CCD-Sensor CCD1 **115** ermittelten Maximalwert und damit ist das Objektbild auf CCD-Sensor CCD0 **120** scharfgestellt, ohne dass ein neuerliches Zurückfahren und damit eine Umkehrung der Motorlaufrichtung erforderlich ist. Befindet sich die Schärfeebene **200** vor dem Beginn der Autofokussierung rechts von CCD-Sensor CCD2 **125**, sind alle Vorgänge symmetrisch umgekehrt auszuführen.

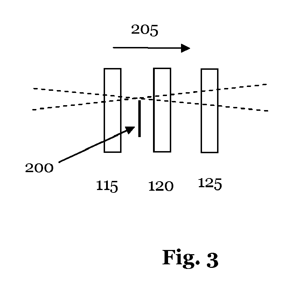

Es sind jedoch auch Situationen denkbar, in denen die Schärfeebene **200** anfänglich zwischen zwei der CCD-Sensoren **115, 120, 125** liegt, wie in **Fig. 3** dargestellt. Dadurch ist der Schärfegradient nicht mehr eindeutig bestimmt. Ebenfalls problematisch ist, dass in diesem Fall durch keinen der äußeren CCD-Sensoren **115, 120, 125** ein Schärfemaximum registriert werden kann, wenn die Schärfeebene in Richtung des mittleren CCD-Sensors CCD0 **120** verschoben wird.

Wird das System bei der in **Fig. 3** gezeigten Konstellation gestartet, messen die CCD-Sensoren **115, 120, 125** verschiedene Signale: Da das Objektbild **200** hier zwischen CCD1 **115** und CCD0 **120** zu liegen kommt, wird der Kontrast der beiden aufeinander kalibrierten Sensoren CCD1 **115** und CCD2 **125** niemals gleich sein. Durch eine Kalibrierung sind die unterschiedlichen Eigenschaften der CCD-Sensoren **115, 120, 125** bekannt und die Signale können zwischen den CCD-Sensoren **115, 120, 125** umgerechnet werden. Durch die Kalibrierung sind die CCD-Sensoren **115, 120, 125** in ihrer Empfindlichkeit bekannt. Sowohl Symmetrie-Eigenschaften als auch die Absolutwerte der Amplituden können in einem einmaligen Kalibrierungsvorgang am Anfang bei der Herstellung ermittelt und abgeglichen werden.

Der unterschiedliche Kontrast auf den CCD-Sensoren **115, 120, 125** reicht zur vollständigen Beschreibung jedoch nicht aus, da dieser auch bei Objektebenen **200** außerhalb des Systems **100** vorliegen kann. Daher ist die Information von CCD0 **120** ebenfalls wichtig: Da in dem in **Fig. 3** gezeigten Beispiel der Kontrast von CCD0 **120** größer als der von CCD2 **125** ist, ist der Schärfegradient negativ und führt zu einem positiven Richtungsvorschub durch den Prozessor.

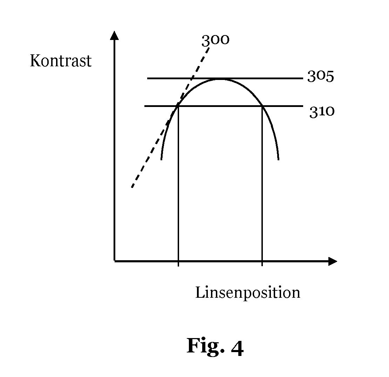

Um feststellen zu können, wann das Schärfemaximum auf dem CCD-Sensor CCD0 **120** erreicht ist, ohne dass dieses bereits zuvor von einem anderen CCD-Sensor gemessen wurde, kann vorzugsweise eine "Ersatztangente" **310** ermittelt werden; dies ist in **Fig. 4** dargestellt.

Vorzugsweise messen alle CCD-Sensoren **115, 120, 125** gleichzeitig die Schärfe. Da die CCD-Sensoren **115, 120, 125** untereinander kalibriert sind, können die jeweiligen Messwerte direkt miteinander verglichen werden. Falls die beiden CCD-Sensoren CCD1 **115** und CCD2 **125** den gleichen Kontrast messen, muss das Schärfemaximum aufgrund der Symmetrie notwendig auf dem mittleren CCD-Sensor CCD0 **120** liegen und Bild ist scharfgestellt.

Genauer betrachtet legt man an den Kontrastverlauf in Abhängigkeit von der Linsenposition eine Tangente **300** an. Diese ist am Maximum waagrecht **305.** Die Ersatztangente **310** wird ermittelt, indem die Linsenposition zeitlich verändert wird und die an den CCD-Sensoren CCD1 **115** und CCD2 **125** gemessenen Kontrastwerte miteinander verglichen werden. Wenn beide Kontrastwerte übereinstimmen, messen beide CCD-Sensoren **115, 125** dieselbe Schärfe (diese entspricht jedoch nicht dem Maximum). Durch diese beiden Messpunkte wird eine Gerade **310** definiert, die parallel zur Tangente **305** bei maximaler Schärfe verläuft. Aufgrund der Symmetrie des Autofokus-Systems muss daher die maximale Schärfe genau zwischen den CCD-Sensoren CCD1 **115** und CCD2 **125** liegen. Da sich dort der CCD-Sensor CCD-Sensor CCD0 **120** befindet, ist das Objekt nun scharfgestellt. Auch in diesem Fall ist ein Hin- und Herfahren des Autofokus-Systems nicht notwendig und das Pumpen kann vermieden werden.

Dies ist nochmals in der folgenden Tabelle 1 gezeigt. Zum Zeitpunkt t₀ wird anhand der gemessenen Kontrastwerte auf den verschiedenen CCD-Sensoren **115, 120, 125** ermittelt, zwischen welchen CCD-Sensoren sich das Objektbild befindet. In dem in Tabelle 1 gezeigten Beispiel führt die Bestimmung dazu, dass der Fokus in positive Richtung **205** bewegt werden muss (vgl. **Fig. 3****),** was im Zeitpunkt t₁ beginnt. Zum Zeitpunkt t₂ wird bei einer bestimmten Linsenposition für die CCD-Sensoren CCD1 **115** und CCD2 **125** derselbe Kontrast gemessen; dieser Kontrast entspricht jedoch nicht dem maximalen Kontrast, da dieser nur an der Stelle des Schärfemaximums gemessen werden kann. Aufgrund der Symmetrie des Autofokussystems befindet sich an der Stelle des Schärfemaximums zum Zeitpunkt t₂ der CCD-Sensor CCD0 **120.** Der CCD-Sensor CCD0 weist somit den höchsten Kontrast auf und das Bild ist scharfgestellt, ohne dass der maximale Kontrast zuvor gemessen wurde und ohne unerwünschtes Pumpen.

**Tabelle 1**

| **Zeit** | **CCD₁** | **CCD₀** | **CCD₂** | **Bemerkung** |
|---|---|---|---|---|
| t₀ | Kontrast ≠CCD₂ | Kontrast > CCD₂ | Kontrast ≠CCD₁ | Startbedingung: Objektbild zwischen CCD₁ und CCD₀ |
| t₁ | Kontrast ≠CCD₂ | Kontrast > CCD₂ | Kontrast ≠CCD₁ | Fokuslauf in positive Richtung beginnt |
| t₂ | Kontrast = CCD₂ | Kontrast > CCD₂ und CCD₁ | Kontrast = CCD₁ | Objektbild exakt auf CCD₀ |
| t₃ | Kontrast = CCD₂ | Kontrast > CCD₂ und CCD₁ | Kontrast = CCD₁ | Fokuslauf endet; Objektbild scharf |

Bei dem erfindungsgemäßen System können die folgenden Fehler auftreten: Beim Einstellen auf ein Objekt **105** ist zunächst nicht bekannt, ob sich die Objektabbildung **200** außerhalb oder innerhalb des CCD-Systems **100** befindet. Dies kann auf folgende Weise festgestellt werden. Befindet sich das Schärfemaximum **200** inmitten der CCD-Sensoren, so sieht man anhand von **Fig. 3** dass die richtige Schubrichtung immer in Richtung des am schwächsten (d.h. unschärfsten) ausgesteuerten Sensors erfolgen muss. Das liegt daran, dass das höchste Schärfepotential immer an den CCD-Sensoren zu messen ist, zwischen denen das Objektbild **200** liegt. Das gilt auch dann, wenn das Schärfemaximum außerhalb der CCD-Sensoren **115, 120, 125** liegt. Aus diesem Grund ist es vorteilhaft, zu allen Zeitpunkten die Kontraste aller CCD-Sensoren **115, 120, 125** zu überwachen und auszuwerten. Im Falle von drei CCD-Sensoren **115, 120, 125** kann die Laufrichtung an allen drei Sensorkontrasten orientiert werden.

Die folgende Tabelle zeigt alle möglichen Fälle, die bei der Lösung des Problems auftreten können (mit Bezug auf **Fig. 2** und **3****).**

**Tabelle 2**

| Fall | CCD₁ | CCD₀ | CCD₂ | Bemerkung | Laufrichtung |
|---|---|---|---|---|---|
| 1 | Kontrast hoch | Kontrast mittel | Kontrast niedrig | Objekt links außerhalb | positiv |
| 2 | Kontrast hoch | Kontrast mittel | Kontrast niedrig | Objekt links innerhalb nahe CCD₁ | positiv |
| 3 | Kontrast mittel oder gleich CCD0 | Kontrast hoch oder gleich CCD₁ | Kontrast niedrig | Objekt links innerhalb nahe CCD₀ | positiv |
| X | Kontrast gleich CCD₂ | Kontrast hoch | Kontrast gleich CCD₁ | Objekt auf CCD₀ | stop |
| 4 | Kontrast niedrig | Kontrast mittel | Kontrast hoch | Objekt rechts außerhalb | negativ |
| 5 | Kontrast niedrig | Kontrast mittel | Kontrast hoch | Objekt rechts innerhalb nahe CCD₂ | negativ |
| 6 | Kontrast niedrig | Kontrast hoch oder gleich CCD₂ | Kontrast mittel oder gleich CCD₀ | Objekt rechts innerhalb nahe CCD₀ | negativ |
| Y | Kontrast gleich CCD₂ | Kontrast hoch | Kontrast gleich CCD₁ | Objekt auf CCD₀ | stop |

Man sieht, dass keine Zweideutigkeiten auftreten können und das Objekt letztendlich immer auf den CCD-Sensor CCD0 **120** scharfgestellt werden kann. Aus den Kontrastwerten der CCD-Sensoren **115, 120, 125** können die Befehle für den Fokusmotor abgeleitet werden.

Insbesondere kann das Schärfemaximum des mittleren CCD-Sensors CCD0 **120** durch zusätzliches Speichern der auftretenden Maximalwerte der äußeren CCD-Sensoren CCD1 **115** und CCD2 **125** redundant abgesichert werden, was die Genauigkeit weiter erhöht. Bei einem neuen Fokussiervorgang sollten die alten Werte jedoch ignoriert werden, da diese dann keine Gültigkeit mehr haben.

Ein Kriterium für eine erfindungsgemäße Fokussierung von außerhalb und damit für ein nützliches Speichern der Maximalwerte der äußeren CCD-Sensoren ist in den Schritten 1-2 und 4-5 der obigen Tabelle 2 gegeben, da hierbei jeweils beim Durchlauf ein Maximum auftritt, welches leicht durch eine Software detektiert werden kann.

Vorzugsweise weist das Autofokus-System eine Objekterkennung auf. Damit kann der Fokuslauf zum Beispiel durch einen Trigger über einen Touchscreen ausgelöst werden. Durch den Trigger werden die Adressbereiche, die ein Objekt einnimmt, eindeutig an den Vergleich für die CCD-Kontraste weitergegeben. Vorzugsweise kann eine Fast-Fourier-Transformation (FFT) mit den Adressen arbeiten, um das jeweilige Schärfemaximum zu bestimmen.

Es sind jedoch auch andere Verfahren als eine FFT verwendet werden. Es kommen insbesondere Verfahren in Frage, die eine Frequenzanalyse des Bildinhaltes vornehmen und zwar in vertikaler, sowie in horizontaler Richtung ("Raumfrequenz-Spektrum"). Diese Verfahren werden z.B. auch in der Bildkompression verwendet. Ein mögliches Verfahren ist die Diskrete Cosinus Transformation (DCT), wie sie vom MPEG-2 Standard verwendet wird (z.B. für SDTV). Ein weiteres Verfahren ist eine Integer-Transformation, wie sie vom H.264 Standard verwendet wird (MPEG-4, Teil 10; z.B. für HDTV verwendet). Ein anderes Verfahren ist die Wavelet-Transformation, wie sie im Standard "D-Cinema" in "JPEG 2000" verwendet wird. Sie hat als Elementarfunktionen sog. Wavelets, d.h. abklingende Wellenfunktionen statt unendlich andauernde wie Sinus oder Cosinus der beiden erstgenannten Verfahren und reagiert daher besser auf begrenzte Objekte, d.h. mit weniger Artefakten.

In modernen Kameras wird die Fokussierung häufig über Software erzielt. So kann z.B. ein Programm oder eine sogenannte Firmware verwendet werden, um die Kamera oder auch nur einzelne Funktionen zu steuern. Alle in dieser Patentanmeldung offenbarten Aspekte können daher auch als Software implementiert werden.

## Patentansprüche

1. Vorrichtung (100) zur automatischen Fokussierung einer Kamera mittels Kontrastsensitivität, aufweisend:
a) einen ersten CCD-Sensor (115, 120, 125) zur Bestimmung eines Schärfemaximums der Kamera;
b) einen Speicher zum Speichern des Schärfemaximums; und
c) einen zweiten CCD-Sensor (115, 120, 125) zum Einstellen des Schärfemaximums.

2. Vorrichtung (100) nach Anspruch 1, weiterhin aufweisend einen dritten CCD-Sensor (115, 120, 125) geeignet zur Bestimmung des Schärfemaximums der Kamera.

3. Vorrichtung (100) nach einem der vorhergehenden Ansprüche, wobei zwischen mindestens zwei CCD-Sensoren (115, 120, 125) ein Schärfegradient bestimmt wird.

4. Vorrichtung (100) nach einem der vorhergehenden Ansprüche, wobei zeitabhängige Kontrastwerte der CCD-Sensoren (11, 120, 125) gespeichert werden.

5. Vorrichtung (100) nach einem der vorhergehenden Ansprüche, wobei aus zwei Kontrastwerten von zwei verschiedenen CCD-Sensoren (115, 120, 125) eine Ersatztangente (310) bestimmt wird.

6. Vorrichtung (100) nach einem der vorhergehenden Ansprüche, wobei das Schärfemaximum und die Kontrastwerte mit einer Fast-Fourier-Transformation bestimmt werden.

7. Verfahren zur automatischen Fokussierung einer Kamera mittels Kontrastsensitivität nach einem der Ansprüche 1 bis 6.

8. Computerprogramm umfassend Instruktionen zur Verwirklichung des Verfahrens nach Anspruch 7.
